# FASCICULE DE BREVET EUROPEEN

(11) **EP 1 021 319 B1**
(45) Date de publication et mention de la délivrance du brevet: **16.03.2005**
(21) Numéro de dépôt: 98949041.2
(22) Date de dépôt: 12.10.1998
(51) Int. Cl.: B60R 25/10

(54) **DISPOSITIF ET PROCEDE D'APPEL D'URGENCE**
NOTRUFVORRICHTUNG UND -VERFAHREN
DEVICE AND METHOD FOR EMERGENCY CALL

(30) Priorité: 10.10.1997 FR 9712702
(43) Date de publication de la demande: 26.07.2000
(73) Titulaire: Renault s.a.s., 92100 Boulogne Billancourt (FR)
(72) Inventeur: GRANIER, Emmanuel, F-92800 Puteaux (FR)
(74) Mandataire: Davies, Owen Robert Treharne
(86) Numéro de dépôt international: PCT/FR1998/002183
(87) Numéro de publication internationale: WO 1999/019177

(56) Documents cités:
- WO-A-93/16452
- WO-A-97/24005
- FR-A- 2 718 552
- US-A- 5 311 197
- US-A- 5 335 264

## Description

L'invention concerne un dispositif et un procédé d'appel d'urgence d'un centre d'assistance par un véhicule, lors d'un accident par exemple, communiquant les informations d'identification du véhicule et de sa localisation sur le réseau routier. L'intérêt d'un tel dispositif tient au fait que le centre d'assistance pourra envoyer une aide adaptée au véhicula accidenté pour accroître l'efficacité des secours.

Actuellement, il existe des dispositifs d'alerte d'un centre d'assistance envoyant un signal d'alerte par déclenchement manuel à l'aide d'un bouton ou par déclenchement automatique, commandé par un capteur de choc intégré dans le véhicule. Le véhicule an détresse envoie un signal d'alerte qui est capté par des récepteurs en écoute constante et qui est ensuite traité par le centre d'assistance pour en déduire l'identification du véhicule et sa localisation. Un tel dispositif est décrit par exemple dans la demande de brevet FR 92 12364 au nom de THOMSON C.S.F. BRAMCH.

La communication entre le véhicule et le centre d'assistance est généralement établie par l'intermédiaire d'un réseau cellulaire de radiotéléphonie sur lequel sont émises les données nécessaires à l'acheminement d'aide, telles que la position du véhicule, estimée. par un récepteur G.P.S. (Global Positionning System), sa vitesse et le numéro de téléphone attribué. Pour confirmer la réception de ce message d'alerte, le centre d'assistance envoie un signal tonal. Dans la demande de brevet européen EP 0737953 A1 au nom de FORD, si le système embarqué sur le véhicule ne reçoit aucun signal de confirmation, il compose alors un second numéro de téléphone en autorisant des échanges vocaux, par lesquels les passagers pourront communiquer oralement les informations nécessaires, affichées sur un écran alphanumérique.

Le principal inconvénient de ces dispositifs actuels est dû au fait qu'ils impliquent obligatoirement que les passagers du véhicule accidenté soient en mesure de communiquer oralement des informations supplémentaires à la suite de l'accident. Les seules informations envoyées par le véhicule sont un identificateur de l'appelant, son numéro de téléphone par exemple, la localisation du véhicule par ses coordonnées GPS, et éventuellement son cap et sa vitesse au moment de l'accident.

Dans le cas où ces informations sont insuffisantes et que les passagers sont incapables de les compléter, le centre d'assistance n'optimise pas l'aide qu'il peut envoyer.

On connaît du document WO-A-93 16452 un procédé pour assurer la sécurité des personnes dans un véhicule, dans lequel il est prévu une unité destinée à gérer une position actuelle du véhicule, et des informations d'identification du conducteur de ce dernier. S'il survient un événement touchant à la sécurité, ces informations sont communiquées à un centre d'assistance par une procédure d'appel automatique sur une ligne de téléphonie cellulaire et de transmission par modulation DTMF (modulation multifréquence sur deux tons). Ces informations servent à afficher au centre une localisation sur carte numérique avec les informations associées. Dans ce cadre, le véhicule peut être équipé de capteurs pour détecter une collision, un vol, ou un dysfonctionnement du véhicule.

Le document US5223844 propose un système d'appel d'un centre de contrôle, le système pouvant transférer des informations concernant un accident. Parmi les informations imaginées, on retrouve une entrée de capteurs incluant un compteur de passagers.

Le but de l'invention est de pallier ces inconvénients en proposant un dispositif d'appel d'urgence envoyant des informations complètes concernant les circonstances du choc et le nombre de passagers, ainsi qu'eventullement un enregistrement sonore sur les minutes précédentes.

Pour cela, un premier objet de l'invention est un dispositif d'appel d'urgence d'un centre d'assistance par un véhicule, ledit véhicule étant équipé d'un système embarqué qui comporte :
- une unité centrale électronique de commande ;
- un module de localisation GPS ;
- un module de communication mobile ;
- des moyens de commande manuelle ;
- des capteurs électroniques de fonctionnement d'organes du véhicule ;
et le centre d'assistance comportant un ordinateur connecté au réseau téléphonique par un modem,
caractérisé en ce que le système embarqué comporte de plus :
- une interface vocale entre le module de communication mobile et l'utilisateur, comprenant un microphone, un haut-parleur et un circuit électronique de contrôle, sous la forme d'un kit "mains libres";
- une mémoire dédiée à l'enregistrement de signaux audio ;
- des capteurs d'ouverture des portières du véhicule ;
- un capteur de choc commandant la coupure de l'arrivée du carburant dans le moteur du véhicule;
- des moyens d'alimentation électrique de secours.

Un second objet de l'invention est un procédé d'appel d'urgence mis en oeuvre par un dispositif tel que précédemment revendiqué, comprenant les étapes suivantes, effectuées :
- en conditions normales de roulage du véhicule, par l'unité centrale du système embarqué :
   . vérification du fonctionnement du module de communication mobile,
   . sauvegarde permanente, sur une durée minimale fixée, de données sur le comportement routier constituées par les derniers points de localisation, la vitesse et la direction du véhicule,
   . évaluation des signaux émis par les capteurs et détection d'un choc,
   . estimation et mémorisation du nombre de passagers,
   . enregistrement permanent, sur une durée minimale fixée d, du signal acoustique capté par le microphone du module,
- en cas de déclenchement manuel ou automatique de la procédure d'appel d'urgence :
   . envoi périodique vers le centre d'assistance, par l'unité centrale du système embarqué vers le centre d'assistance, d'un message court des données mémorisées sur le comportement routier du véhicule,
   . appel automatique du numéro de téléphone du centre d'assistance pour l'établissement d'une communication vocale entre les passagers du véhicule et le centre,
   . envoi de données mémorisées essentielles sur le comportement routier du véhicule, constituées notamment par le dernier point de localisation et par le type de déclenchement de la procédure d'appel, manuel ou automatique, par codage "Dual Tone Multiple Frequency" -D.T.M.F.-, sur le canal voix ainsi établi,
   . confirmation de la réception correcte des données par le centre d'assistance, interrompant l'envoi périodique des données.

Selon un second mode de fonctionnement, le procédé comprenant les étapes suivantes, effectuées :
- en conditions normales de roulage du véhicule, par l'unité centrale du système embarqué :
   . vérification du fonctionnement du module de communication mobile,
   . sauvegarde permanente, sur une durée minimale fixée, de données sur le comportement routier constituées par les derniers points de localisation, la vitesse et la direction du véhicule,
   . évaluation des signaux émis par les capteurs et détection d'un choc,
   . estimation et mémorisation du nombre de passagers,
   . enregistrement permanent, sur une durée minimale fixée d, du signal acoustique capté par le microphone du module dans la mémoire audio (13),
- en cas de déclenchement manuel ou automatique de la procédure d'appel d'urgence :
   . envoi, par l'unité centrale du système embarqué vers le centre d'assistance, d'un message court des données mémorisées sur le comportement routier du véhicule,
   . appel automatique du numéro de téléphone du centre d'assistance pour l'établissement d'une communication vocale entre les passagers du véhicule et le centre,
   . envoi de données mémorisées essentielles sur le comportement routier du véhicule, constituées notamment par le dernier point de localisation et par le type de déclenchement de la procédure d'appel, manuel ou automatique, par codage "Dual Tone Multiple Frequency" -D.T.M.F.-, sur le canal voix ainsi établi
   . envoi par le centre d'assistance, en cas de réception défectueuse des données, d'un signal de commande du renvoi des données par le système embarqué.

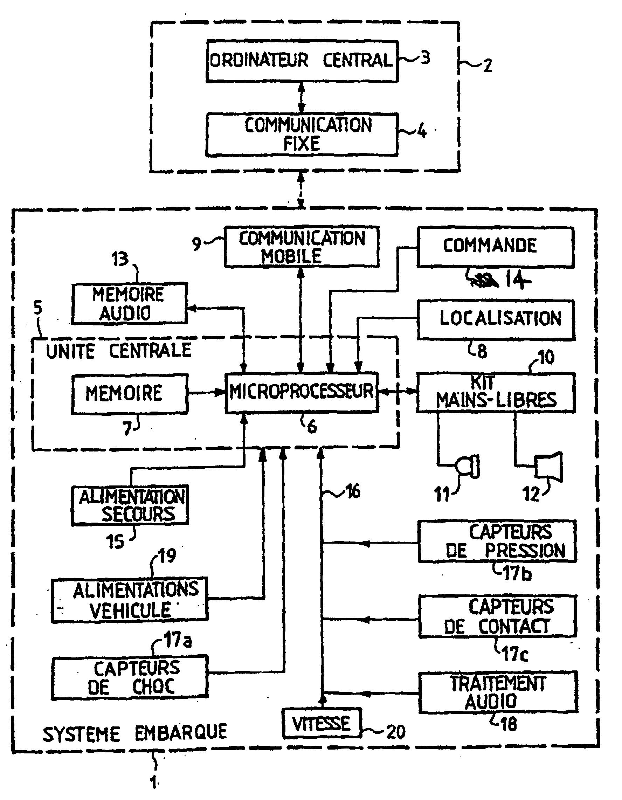

D'autres caractéristiques et avantages de l'invention apparaîtront à la lecture de la description suivante, illustrée par la figure unique, qui est un schéma synoptique du dispositif.

Comme le montre le schéma synoptique de la figure, le dispositif d'alerte comprend essentiellement deux parties : le système 1 embarqué dans le véhicule mobile d'une part, et une station traitant des appels au niveau d'un centre d'assistance 2 d'autre part.

Cette dernière partie est principalement composée d'un ordinateur 3, connecté au réseau téléphonique par le biais d'un modem 4.

Le système embarqué 1 comprend :
- une unité centrale 5, composée d'un microprocesseur 6 et d'une mémoire 7, dans laquelle sont stockés notamment les numéros de téléphone du centre d'assistance ;
- un module de localisation 8, composé notamment d'un récepteur GPS et de son antenne GPS, et qui peut être complété par d'autres moyens tels qu'un gyromètre ;
- un module de communication mobile 9, composé d'un radiotéléphone adapté au réseau cellulaire, de type GSM par exemple, et qui peut être portable, avec une antenne extérieure si besoin est ;
- une interface vocale 10 entre le module de communication mobile et l'utilisateur, comprenant un microphone 11, un haut-parleur 12 et un circuit électronique de contrôle, sous forme de kit "mains libres", permettant au microphone de capter les sons sans que le combiné téléphonique soit pris en main par un passager ;
- une mémoire 13 dédiée à l'enregistrement de signaux audio, comme une mémoire EEPROM audio analogique, qui peut être soit physiquement intégrée sur le radiotéléphone, soit dans un boîtier électronique dédié à la fonction d'appel d'urgence ;
- un boîtier de commande 14, avec un ou plusieurs boutons destinés au déclenchement manuel d'un signal d'appel d'urgence ;
- une alimentation électrique de secours 15, assurant l'alimentation des éléments du système embarqué dans le cas où les alimentations 19 du véhicule seraient hors d'usage à cause d'une batterie principale défaillante;
- une connexion à un capteur de vitesse 20 du véhicule;
- une liaison 16 entre l'unité centrale 5 et différents capteurs et éléments du véhicule, constituée par exemple par un bus électronique de communication.

Cette liaison permet le contrôle, par le microprocesseur 6, des signaux émis par des capteurs de choc 17ₐ, des capteurs de pression 17_{b} intégrés dans les sièges, ou des capteurs d'ouverture des portières 17_{c}, ou bien encore par une unité centrale électronique 18 de traitement des signaux audio dans le cas où le nombre de passagers est calculé à partir du signal acoustique détecté dans l'habitacle.

Le procédé d'appel d'urgence mis en oeuvre par le dispositif précédemment décrit comporte les étapes suivantes :
- en conditions normales de roulage du véhicule, tout d'abord, au démarrage du véhicule, l'unité centrale 5 vérifie le bon fonctionnement de l'ensemble du dispositif. Si le module de communication mobile 9 est un radiotéléphone portable, l'unité centrale 5 contrôle qu'il est présent et mis en service.

Dans le cas d'un radiotéléphone nécessitant l'introduction d'un code pour autoriser l'établissement d'une communication, tel un code PIN - Personal Identity Number - prévu dans les radiotéléphones GSM - Global System for Mobile Communication -, l'unité centrale 5 en fait la demande à l'utilisateur, par un signal sonore ou visuel. Éventuellement, elle peut mémoriser le code saisi par l'opérateur afin de l'entrer automatiquement lors d'un prochain démarrage du véhicule.

L'unité centrale lit en permanence les signaux reçus des capteurs de choc 17ₐ pour détecter la survenue d'un accident. Elle mémorise simultanément les derniers points de localisation du véhicule, datés et envoyés par le module de localisation, ainsi que la vitesse et la direction du véhicule, dans sa mémoire locale 7.

Selon une variante, l'information vitesse issue du capteur 20 du véhicule permet à l'unité centrale 5 de calculer la distance parcourue depuis le dernier point de localisation GPS. Cette donnée est importante lorsque la localisation est assurée par un récepteur GPS seul, pour indiquer l'absence éventuelle de point.

Pour adapter au mieux l'aide à envoyer au véhicule, en cas de problème, l'unité centrale sauvegarde également, dans sa mémoire locale 7, le nombre de passagers présents dans le véhicule, qui est une donnée obtenue à partir des signaux émis soit par des capteurs de pression installés dans chaque siège, soit à partir des ouvertures des portières, ou bien encore à partir des signaux acoustiques captés par le microphone.

Selon une caractéristique de l'invention, l'estimation du nombre de passagers à partir de l'ouverture des portières est aisément réalisable en utilisant par exemple les capteurs de contact élémentaires 17_{c}, actuellement montés au niveau de chaque portière en vue de la commande de la lumière du plafonnier. En tenant compte du nombre d'ouvertures détectées par portière et de la durée de ces ouvertures, on estime le nombre de passagers, connaissant les caractéristiques du véhicule, c'est-à-dire son nombre de places, son nombre de portières ..., qui sont stockées par le centre d'assistance.

Selon une autre caractéristique de l'invention, dans le cas d'un véhicule équipé d'une unité de traitement 18 de signal sonore, appliquée à la reconnaissance vocale par exemple, cette unité 18 évalue, lors de la détection d'un signal vocal, un identificateur élémentaire de la voix détectée, basé sur son spectre de fréquences et déterminé **à** l'aide de techniques connues d'identification du locuteur. L'unité de traitement 18 mémorise ensuite cet identificateur s'il est très différent de ceux préalablement stockés. Le nombre d'identificateurs représente le nombre de passagers qui se sont exprimés oralement dans le véhicule.

Une autre caractéristique de l'invention prévoit l'enregistrement permanent du signal sonore, capté par le microphone 11 du kit de téléphonie "mains libres" 10, sur la mémoire audio 13 du système 1 embarqué dans le véhicule, pendant une durée minimale d prédéterminée.

Selon un mode de réalisation, le signal sonore capté par le microphone est mémorisé sur deux zones distinctes de la mémoire audio 13, de taille correspondant à la durée d de sauvegarde déterminée. Quand une des deux zones est remplie, l'unité centrale bascule l'enregistrement sur la seconde zone. On obtiendra le signal sonore complet en juxtaposant les deux zones mémorisées successivement dans l'ordre chronologique de l'enregistrement.

En cas de problème, la procédure d'appel d'urgence est déclenchée soit manuellement par un des passagers du véhicule, soit automatiquement à la suite de la détection d'un choc.
Dans un premier cas, le ou un des passagers du véhicule est capable de provoquer manuellement la procédure d'appel d'urgence, à 'l'aide du boîtier de commande 14. L'unité centrale 5 du système embarqué 1 détermine alors si un point de localisation GPS est disponible et l'ajoute à l'historique du déplacement déjà mémorisé. Puis, elle envoie au centre d'assistance 2 un message de courte durée, de type S.M.S. par exemple - Short Message Service, issu de la norme G.S.M. - indépendamment du canal voix, et contenant des données mémorisées sur le comportement routier du véhicule. Ce message est constitué d'une variable indiquant le type de déclenchement, manuel ou automatique, des dernières positions de localisation du véhicule, de la vitesse et du cap correspondant au dernier point de localisation GPS pour lequel la vitesse est suffisante pour obtenir une précision correcte, de la distance parcourue depuis ce dernier point, du nombre des passagers, de l'intensité du choc provenant de capteurs d'accélération intégrés au véhicule dans le dispositif de sécurité par coussin gonflable, dit "air-bag", en particulier, et éventuellement de l'identification de l'abonné au radiotéléphone ou du véhicule.

Pour mieux comprendre les causes et la gravité d'un accident et ainsi mieux dimensionner les moyens de secours à mettre en oeuvre à la suite d'un appel d'urgence, l'invention prévoit également que l'unité centrale 5 du système embarqué 1 dans le véhicule récupère certaines informations et les stocke dans la mémoire locale 7, pour être ensuite envoyées au centre d'assistance. Ces informations complémentaires sont par exemple le fonctionnement des essuie-glaces, traduisant la présence de pluie, celui des systèmes d'éclairage comme les projecteurs anti-brouillard, les feux de croisement de route, la température de la chaussée quand cette information est disponible, ou bien encore la pression des pneus s'ils sont équipés de capteurs de pression.

Une information particulièrement importante peut être fournie au centre d'assistance, lorsque le véhicule appelant est équipé d'un détecteur de proximité ; c'est la présence éventuelle d'un autre véhicule à son voisinage, ainsi que sa distance et sa vitesse.

Lors de la détection d'un choc, la mise à jour de la mémoire locale 7 est interrompue et les données précédemment stockées sont ajoutées au message S.M.S. envoyé au centre d'assistance.

Ensuite, l'unité centrale 5 compose automatiquement le numéro de téléphone du centre d'assistance, qui est stocké dans sa mémoire 7 du système 1, pour une communication vocale. Pour garantir le temps de réception, par le centre d'assistance, des informations essentielles à l'acheminement d'aide vers le véhicule accidenté, comme sa position par exemple et le type manuel ou automatique de déclenchement de la procédure, celles-ci sont envoyées, en superposition, sur le canal voix, par codage D.T.M.F. - Dual Tone Multiple Frequency -, qui est un système de signalisation analogique défini dans la recommandation U.I.T. Q23, qui permet notamment le codage des touches téléphoniques. Le canal voix est alors disponible pour une communication vocale entre les passagers et le centre d'assistance. Simultanément, l'appelant est identifié par son numéro de téléphone, généralement transmis lors de l'appel de façon numérique, notamment lors des communications à l'aide du réseau cellulaire G.S.M. Les autres informations concernant le conducteur, telles que son identité, son groupe sanguin, ou celles concernant le véhicule, sont délivrées, grâce à la connaissance du numéro de téléphone, par une base de données constituée à partir de tous les abonnés au service du centre d'assistance.

Dans le second cas d'appel d'urgence, la procédure est déclenchée automatiquement lorsque l'unité centrale détecte un choc à partir d'un signal émis par un capteur. Si les passagers présents dans le véhicule accidenté ne sont pas en mesuré de répondre oralement à l'appel téléphonique du centre d'assistance, pour communiquer les informations nécessaires à une aide adaptée, alors le centre d'appels peut demander la restitution de l'enregistrement sonore mentionné auparavant, en envoyant un signal de commande sous forme d'un message court S.M.S. dont le contenu est connu du système embarqué. Il peut également envoyer un signal tonal, une sinusoïde par exemple, ou plus avantageusement un signal codé D.T.M.F., composé de 12 codes correspondant aux 12 touches du clavier téléphonique du véhicule.

Le système embarqué ayant reçu un de ces types de commande restitue sur le canal voix, à partir de la communication téléphonique établie à la suite de la détection d'un choc, le signal sonore stocké dans les deux zones mémoire, dans l'ordre chronologique d'enregistrement.

L'invention prévoit deux modes de fonctionnement, quelque soit le type de déclenchement de la procédure d'appel. Selon un premier mode, le système embarqué envoie périodiquement le message court et les données codées DTMF selon une période égale à 30 secondes par exemple, jusqu'à ce que le centre d'assistance confirme leur bonne réception par un signal de confirmation.
Selon un second mode de fonctionnement, l'envoi du message court et des données codées est fait une seule fois, sauf si le centre d'assistance demande, par un signal de commande, leur renvoi pour cause de réception défectueuse, ce signal de commande étant différent du signal de commande de l'envoi du signal sonore.

Selon une caractéristique particulièrement intéressante, le centre d'assistance utilise l'avis d'appel pour commander l'envoi de l'enregistrement sonore ou le renvoi des données du véhicule. Pour cela, le centre étant en communication vocale avec les passagers du véhicule, à partir du numéro de téléphone composé automatiquement par le système embarqué, lors du choc, il compose à son tour le numéro du radiotéléphone embarqué sur le véhicule. Ce dernier reçoit un avis d'appel, vérifie que le numéro de l'appelant correspond à un numéro du centre d'assistance mémorisé et refuse cet appel pour annuler le coût de l'opération pour le centre 2. Le système 1 interprète ce deuxième appel comme un signal de commande et envoie alors les données caractéristiques du véhicule et de l'accident, ainsi que l'enregistrement sonore si besoin est.

Concernant la détection d'un choc du véhicule par l'unité centrale du système 1 embarqué provoquant le déclenchement automatique de la procédure d'appel d'urgence, elle peut être faite à partir d'un capteur à inertie déclenchant le dispositif "air-bag" ou les prétentionneurs de ceinture de sécurité, à condition que le véhicule soit équipé d'un bus de communication entre les capteurs et l'unité centrale.

Selon une variante de réalisation, on peut fixer une première borne d'un contacteur mécanique sur le support de la ceinture de sécurité situé entre les sièges et l'autre borne sur sa boucle d'accrochage de sorte que le déclenchement du prétentionneur, à la suite d'un choc, provoque le contact des deux bornes et l'apparition d'un signal électrique envoyé à l'unité centrale 5 du système 1.

Selon une caractéristique de l'invention, la détection du choc par l'unité centrale 5 est faite à partir d'un capteur à inertie, réagissant suivant trois axes, utilisé dans un dispositif de sécurité qui coupe l'arrivée de carburant dans le moteur, en cas de choc, quel que soit sa direction et même en cas de retournement du véhicule. Ce dispositif inclut plusieurs sorties qui peuvent être exploitées sans danger.

Par ailleurs, dans le cas d'une installation du dispositif d'appel d'urgence en seconde monte, une mauvaise manipulation peut provoquer le déclenchement du dispositif de sécurité, sans conséquence fâcheuse puisque l'interrupteur commandant l'arrivée d'essence peut être repositionné manuellement, contrairement au capteur de déclenchement de l'"air-bag".

Selon une autre caractéristique, l'invention prévoit l'utilisation du signal reçu par le microphone 11 du module de téléphonie "mains libres" 10 pour identifier l'explosion d'un "air-bag" dans le véhicule ou le déclenchement d'un prétentionneur de ceinture de sécurité, à la suite d'un choc. En effet, la détonation provoquée par le déclenchement d'un air-bag ou d'un prétentionneur génère un bruit important, d'un niveau sonore très supérieur aux bruits courants perceptibles dans un habitacle de véhicule en roulage. Pour cela, l'unité centrale 5 compare en permanence le niveau du signal électrique généré par le microphone à une valeur de seuil de référence. Si ce seuil est dépassé pendant une durée déterminée l'unité centrale 5 déclenche automatiquement la procédure d'appel d'urgence.

Lors de l'initialisation du système embarqué, au cours de laquelle certaines données, comme les numéros de téléphone du centre d'assistance, doivent être entrées dans une mémoire du système, une solution avantageuse consiste à stocker ces données sur la carte S.I.M. dont dispose tout détenteur d'un abonnement à un réseau de radiotéléphonie cellulaire G.S.M. , A la première utilisation du système embarqué, l'unité centrale 5 lit les données mémorisées sur la carte S.I.M. et les stocke dans sa mémoire 7. Elle peut également lire, à chaque utilisation du système embarqué, les données mémorisées sur cette carte, ce qui permet notamment des modifications ultérieures.

## Revendications

1. Dispositif d'appel d'urgence par un véhicule vers un centre d'assistance, ledit véhicule étant équipé d'un système (1) embarqué qui comporte :
- une unité centrale (5) électronique de commande ;
- un module de localisation (8) ;
- un module de communication mobile (9) ;
- des moyens de commande manuelle (14) ;
- des capteurs électroniques (17ₐ, 17_{b} et 17_{c}) de fonctionnement d'organes du véhicule ;
- une interface vocale (10) entre le module de communication mobile et l'utilisateur, comprenant un microphone (11), un haut-parleur (12) et un circuit électronique de contrôle, sous forme d'un kit "mains libres" ;
- des capteurs (17_{c}) d'ouverture des portières du véhicule ;
- un capteur (17ₐ) de choc commandant la coupure de l'arrivée du carburant dans le moteur du véhicule ; et
- des moyens (15) d'alimentation électrique de secours pour les éléments du système embarqué;
**caractérisé en ce que** le système embarqué (1) comporte de plus :
- une mémoire électronique (13) dédiée à l'enregistrement permanent des signaux audio détectés dans l'habitacle du véhicule ; et une unité centrale électronique (18) de traitement du signal acoustique détecté dans l'habitacle du véhicule, appliquée à la reconnaissance vocale pour évaluer, lors de la détection de signaux vocaux, des identificateurs élémentaires des voix détectées, à partir desquels l'unité centrale (5) du système embarqué estime le nombre de passagers présents dans le véhicule.

2. Dispositif d'appel d'urgence selon la revendication 1, **caractérisé en ce que** le système embarqué (1) dans le véhicule comporte de plus une connexion à un capteur de vitesse (20) du véhicule.

3. Procédé d'appel d'urgence mis en oeuvre par un dispositif selon la revendication 2, comprenant les étapes suivantes, effectuées:
- en conditions normales de roulage du véhicule, par l'unité centrale (5) du système embarqué (1) :
. vérification du fonctionnement du module de communication mobile (9),
. sauvegarde permanence, sur une durée minimale fixée (d), des derniers points de localisation, de la vitesse, de la direction du véhicule et de la distance parcourue depuis le dernier point de localisation dans la mémoire locale (7),
. évaluation des signaux émis par les capteurs et détection d'un choc,
. estimation et mémorisation du nombre de passagers,
. enregistrement permanent, sur une durée minimale fixée (d), du signal acoustique capté par le microphone (11) du module (10), dans la mémoire audio (13),
- en cas de déclenchement manuel ou automatique de la procédure d'appel d'urgence ;
. appel automatique du numéro de téléphone du centre d'assistance (2) pour l'établissement d'une communication vocale entre les passagers du véhicule et centre (2),
. envoi périodique vers le centre d'assistance (2) par l'unité centrale (5) du système embarqué (1), d'un message court des données mémorisées sur le comportement routier du véhicule,
. envoi des données mémorisées essentielles sur le comportement routier du véhicule, constituées notamment par le dernier point de localisation et par le type de déclenchement de la procédure d'appel, par codage D.T.M.P (modulation multifréquence sur deux tons) sur le canal vocal ainsi établie
. confirmation de la réception correcte des données par le centre d'assistance (2), interrompant l'envoi périodique des données.

4. Procédé d'appel d'urgence mis en oeuvre par un dispositif selon la revendication 2, comprenant les étapes suivantes, effectuées :
- en conditions normales de roulage du véhicule, par l'unité centrale (5) du système embarqué (1) :
. vérification du fonctionnement du module de communication mobile (9)
. sauvegarde permanente, sur une durée minimale fixée (d) de données sur le comportement routier constituées par les derniers points de localisation, la vitesse et la direction du véhicule,
. évaluation permanente des signaux émis par les capteurs et détection d'un choc,
. estimation et mémorisation du nombre de passagers,
. enregistrement permanent, sur une durée minimale fixée (d), du signal acoustique capté par le microphone (11) du module (10) dans la mémoire audio (13),
- en cas de déclenchement manuel ou automatique de la procédure d'appel d'urgence :
. appel automatique du numéro de téléphone du centre d'assistance pour l'établissement d'une communication vocale entre les passagers du véhicule et le centre,
. envoi , par l'unité centrale (5) du système embarqué (1) vers le centre d'assistance (2), d'un message court des données mémorisées sur le comportement routier du véhicule;
. envoi de données mémorisées essentielles sur le comportement routier du véhicule, constituées notamment par le dernier point de localisation et par le type de déclenchement de la procédure d'appel, manuel ou automatique, par codage D.T.M.F. sur le canal voix ainsi établi
. envoi par le centre d'assistance, en cas de réception défectueuse des données, d'un signal de commande du renvoi des données par le système embarqué.

5. Procédé d'appel d'urgence selon l'une des revendications 3 ou 4 **caractérisé en ce qu'**il comprend une étape supplémentaire de calcul de la distance parcourue par le véhicule depuis le dernier point de localisation GPS disponible.

6. Procédé d'appel d'urgence selon l'une des revendications 3, 4 ou 5, mis en oeuvre par un dispositif équipé d'un module de communication mobile (9) adaptée au réseau cellulaire G.S.M., **caractérisé en ce que**, en cas de déclenchement de la procédure d'appel d'urgence, l'unité centrale (5) du système embarqué (1) sur le véhicule :
. envoie les données préalablement mémorisées sur le comportement routier du véhicule sous forme d'au moins un message de type "Short Message Service" S.M.S.,
. compose automatiquement le numéro de téléphone du centre d'assistance (2), mémorisé dans le système (1), et envoie les données essentielles par codage D.T.M.F., en superposition sur le canal de la communication vocale ainsi établie,
et **en ce que** le centre d'assistance (2) :
. identifie le véhicule par son numéro de téléphone transmis lors de son appel par l'unité centrale (5) du système embarqué (1) et en déduit, à partir d'une base de données stockée au niveau du centre d'assistance, d'autres informations concernant l'identification du véhicule et du conducteur.

7. Procédé d'appel d'urgence selon les revendications 3 et 6, **caractérisé en ce que** la confirmation de la réception correcte des données par le centre d'assistance (2) est réalisée par un avis d'appel au véhicule, dont le système embarqué (1) vérifie que le numéro de l'appelant correspond au numéro du centre (2) mémorisé.

8. Procédé d'appel d'urgence selon la revendication 6, **caractérisé en ce que**, dans le cas où les passagers ne communiquent pas oralement avec le centre d'assistance (2), lors de l'établissement de la communication vocale, le centre (2) envoie un signal de commande de restitution de l'enregistrement du signal acoustique fait par le système (1) du véhicule, ce signal de commande s'effectuant sous forme d'un signal S.M.S., d'un signal tonal, d'un signal codé D.T.M.F. ou d'un avis d'appel, et **en ce que** le système embarqué (1) restitue, sur le canal voix de ladite communication établie, ledit signal sonore enregistré dans la mémoire audio (13).

9. Procédé d'appel d'urgence selon l'une des revendications 3, 4 ou 6, **caractérisé en ce que** le déclenchement automatique de la procédure d'appel d'urgence par l'unité centrale (5) du système embarqué est provoqué par la détection d'un signal émis par un capteur à inertie, utilisé dans un dispositif de sécurité destiné à couper l'arrivée de carburant dans le moteur en cas de choc.

10. Procédé d'appel d'urgence selon l'une des revendications 3, 4 ou 6, **caractérisé en ce que** le déclenchement automatique de la procédure d'appel d'urgence par l'unité centrale (5) du système embarqué (1) est provoqué par la détection d'un signal émis par le déclenchement d'un prétentionneur de ceinture de sécurité, ledit déclenchement provoquant le contact entre deux bornes d'un contacteur mécanique fixées respectivement sur le support de ladite ceinture et sur, sa boucle d'accrochage.

11. Procédé d'appel d'urgence selon l'une des revendications 3, 4, ou 6, **caractérisé en ce que** le déclenchement automatique de la procédure d'appel d'urgence par l'unité centrale (5) du système embarqué (1) est provoqué par la détection d'un signal sonore correspondant à la détonation émise en cas de choc par le déclenchement d'un dispositif de sécurité par coussin gonflable, ou d'un prétentionneur de ceinture de sécurité, l'unité centrale (5) comparant en permanence le niveau du signal électrique généré par le microphone (11) du kit de téléphonie "mains libres" à une valeur de seuil de référence.

12. Procédé d'appel d'urgence selon l'une des revendications 3, 4 ou 6, **caractérisé en ce que** le déclenchement automatique de la procédure d'appel d'urgence par l'unité centrale (5) du système embarqué (1) est provoqué par la détection d'un signal émis par le déclenchement d'un dispositif de sécurité par coussin gonflable sous l'effet d'un choc.

13. Procédé d'appel d'urgence selon l'une des revendications 3, 4 ou 6 **caractérisé en ce que** l'unité centrale (5) du système embarqué (1) dans le véhicule estime le nombre de passagers présents dans le véhicule à partir du nombre d'ouvertures des portières détectées par des capteurs de contact élémentaires (17_{c}) montés au niveau de chaque portière, et de la durée de ces ouvertures.

14. Procédé d'appel d'urgence selon l'une des revendications 3, 4 ou 6, **caractérisé en ce que** l'unité centrale (5) du système embarqué (1) mémorise en permanence le signal sonore capté par le microphone (11) du kit de téléphonie "mains libres" (10), sur deux zones distinctes de la mémoire audio (13) du système (1) successivement.

15. Procédé d'appel d'urgence selon l'une des revendications 4 ou 5, **caractérisé en ce que**, dans le cas où le module de communication mobile (9) est un radiotéléphone portable, l'unité centrale (5) du système embarqué (1) dans le véhicule vérifie sa présence et sa mise en service.

16. Procédé d'appel d'urgence selon l'une des revendications 3, 4 ou 6 , **caractérisé en ce que**, dans le cas d'un radiotéléphone nécessitant un code pour autoriser l'établissement d'une communication, l'unité centrale (5) du système embarqué (1) en fait la demande au conducteur du véhicule, par un signal sonore ou visuel.

17. Procédé d'appel d'urgence selon l'une des revendications 3, 4, 6 ou 7 **caractérisé en ce que** l'unité centrale (5) du système embarqué (1)- mémorise le code autorisant l'établissement des communications, saisi une première fois par le conducteur du véhicule, et entre automatiquement ledit code à chaque nouveau démarrage du véhicule.

18. Procédé d'appel d'urgence selon les revendications 3 et 4 , **caractérisé en ce que**, en conditions normales de roulage du véhicule, l'unité centrale (5) du système embarqué (1) mémorise des informations complémentaires délivrées par des capteurs équipant le véhicule, telles que le fonctionnement des essuie-glaces et des systèmes d'éclairage, la température de la chaussée, la pression des pneus, et la présence éventuelle d'un autre véhicule dans son voisinage délivrée par un détecteur de proximité.

19. Procédé d'appel d'urgence selon la revendication 6, **caractérisé en ce que**, dans le cas où le véhicule est équipé d'un module de communication mobile (9) adaptée au réseau cellulaire G.S.M. et dispose d'une carte S.I.M., l'unité centrale (5) du système embarqué (1) lit les données mémorisées sur la carte S.I.M., comme les numéros de téléphone du centre d'assistance, et les stocke dans sa mémoire (7).

## Patentansprüche

1. Vorrichtung für den Notruf von einem Fahrzeug an eine Hilfszentrale, wobei das Fahrzeug mit einem Bordsystem (1) ausgestattet ist, das umfasst:
- eine elektronische Zentraleinheit (5) zur Steuerung;
- ein Lokalisierungsmodul (8);
- ein Modul zur mobilen Kommunikation;
- Mittel zur manuellen Steuerung (14);
- elektronische Sensoren (17ₐ, 17_{b} und 17_{c}) für das Funktionieren der Teile des Fahrzeugs;
- eine Sprachschnittstelle (10) zwischen dem Modul zur mobilen Kommunikation und dem Benutzer, umfassend ein Mikrofon (11), einen Lautsprecher (12) und eine elektronische Steuerschaltung, in Form einer "Freisprechanlage";
- Sensoren (17_{c}) für die Öffnung der Fahrzeugtüren;
- einen Aufprallsensor (17ₐ), der die Unterbrechung der Treibstoffzufuhr im Motor des Fahrzeugs steuert; und
- Mittel (15) zur elektrischen Notversorgung für die Elemente des Bordsystems;
**dadurch gekennzeichnet, dass** das Bordsystem (1) darüber hinaus aufweist:
- einen elektronischen Speicher (13), der für die ununterbrochene Aufzeichnung der Audiosignale bestimmt ist, die im Fahrgastraum ermittelt werden; und
- eine elektronische Zentraleinheit (18), zur Verarbeitung des akustischen Signals, das im Fahrgastraum ermittelt wird, die zur Spracherkennung verwendet wird, um bei der Ermittlung von Sprachsignalen die elementaren Identifikatoren der ermittelten Stimmen auszuwerten, von denen ausgehend die Zentraleinheit (5) des Bordsystems die Anzahl der Passagiere schätzt, die im Fahrzeug anwesend sind.

2. Vorrichtung für den Notruf gemäß Anspruch 1, **dadurch gekennzeichnet, dass** das Bordsystem (1) im Fahrzeug darüber hinaus einen Anschluss an einen Geschwindigkeitssensor (20) des Fahrzeugs aufweist.

3. Verfahren für einen Notruf, der durch eine Vorrichtung gemäß Anspruch 2 durchgeführt wird, das die folgenden Schritte umfasst, die ausgeführt werden:
- bei normalen Fahrbedingungen des Fahrzeugs, durch die Zentraleinheit (5) des Bordsystems (1):
• Überprüfung des Funktionierens des Moduls zur mobilen Kommunikation (9),
• permanente Speicherung, über einen festgelegten Mindestzeitraum (d) hinweg, der letzten Lokalisierungspunkte, der Geschwindigkeit, der Richtung des Fahrzeugs und der seit dem letzten Lokalisierungspunkt zurückgelegten Strecke im lokalen Speicher (7),
• Auswertung der Signale, die von den Sensoren abgegeben werden und Erkennung eines Aufpralls,
• Schätzung und Speicherung der Anzahl der Passagiere,
• ununterbrochene Speicherung, über einen festgelegten Mindestzeitraum (d) hinweg, des akustischen Signals, das vom Mikrofon (11) des Moduls (10) aufgenommen wird, im Audiospeicher (13),
- im Fall manueller oder automatischer Auslösung der Notrufprozedur:
• automatische Wahl der Telefonnummer der Hilfszentrale (2) zur Herstellung einer Sprachverbindung zwischen den Passagieren des Fahrzeugs und der Zentrale (2),
• periodisches Senden an die Hilfszentrale (2), durch die Zentraleinheit (5) des Bordsystems (1), einer Kurznachricht der gespeicherten Daten über das Fahrverhalten des Fahrzeugs,
• Senden der essentiellen gespeicherten Daten über das Fahrverhalten des Fahrzeugs, die sich insbesondere aus dem letzten Lokalisierungspunkt und der Art des Auslösens der Anrufprozedur zusammensetzen, durch D.T.M.F. Kodierung (Multifrequenzmodulation auf zwei Tönen), über den so hergestellten Sprachkanal,
• Bestätigung des korrekten Empfangs der Daten durch die Hilfszentrale (2), wobei das periodische Senden der Daten unterbrochen wird.

4. Verfahren für einen Notruf, der durch eine Vorrichtung gemäß Anspruch 2 durchgeführt wird, das die folgenden Schritte umfasst, die ausgeführt werden:
- bei normalen Fahrbedingungen des Fahrzeugs, durch die Zentraleinheit (5) des Bordsystems (1):
• Überprüfung des Funktionierens des Moduls zur mobilen Kommunikation (9),
• ununterbrochene Speicherung, über einen festgelegten Mindestzeitraum (d) hinweg, der Daten über das Fahrverhalten, die sich aus den letzten Lokalisierungspunkten, der Geschwindigkeit und der Richtung des Fahrzeugs zusammensetzen,
• permanente Auswertung der Signale, die von den Sensoren abgegeben werden und Erkennung eines Aufpralls,
• Schätzung und Speicherung der Anzahl der Passagiere,
• ununterbrochene Speicherung, über einen festgelegten Mindestzeitraum (d) hinweg, des akustischen Signals, das vom Mikrofon (11) des Moduls (10) aufgenommen wird, im Audiospeicher (13),
- im Fall manueller oder automatischer Auslösung der Notrufprozedur:
• automatische Wahl der Telefonnummer des Hilfszentrale zur Herstellung einer Sprachverbindung zwischen den Passagieren des Fahrzeugs und der Zentrale,
• Senden, durch die Zentraleinheit (5) des Bordsystems (1) an die Hilfszentrale (2), einer Kurznachricht der gespeicherten Daten über das Fahrverhalten des Fahrzeugs,
• Senden der essentiellen gespeicherten Daten über das Fährverhalten des Fahrzeugs, die sich insbesondere aus dem letzten Lokalisierungspunkt und der Art des Auslösens der Anrufprozedur, manuell oder automatisch, zusammensetzen, durch D.T.M.F. Kodierung, über den so hergestellten Sprachkanal,
• im Falle fehlerhaften Empfangs der Daten, Senden durch die Hilfszentrale eines Signals zur Steuerung des nochmaligen Sendens der Daten durch das Bordsystem.

5. Verfahren für einen Notruf gemäß einem der Ansprüche 3 oder 4, **dadurch gekennzeichnet, dass** es einen zusätzlichen Schritt zur Berechnung der Strecke umfasst, die vom Fahrzeug seit dem letzten verfügbaren GPS Lokalisierungspunkt zurückgelegt wurde.

6. Verfahren für einen Notruf gemäß einem der Ansprüche 3, 4 oder 5, durchgeführt durch eine Vorrichtung, die mit einem mobilen Kommunikationsmodul (9) ausgestattet ist, das für ein zelluläres G.S.M. Netz ausgelegt ist, **dadurch gekennzeichnet, dass** im Fall des Auslösens der Notrufprozedur die Zentraleinheit (5) des Bordsystems (1) im Fahrzeug:
• die zuvor gespeicherten Daten über das Fahrverhalten des Fahrzeugs in Form von mindestens einer Nachricht vom Typ "Short Message Sevice" S.M.S. sendet,
• automatisch die Telefonnummer der Hilfszentrale (2) wählt, die im System (1) gespeichert ist, und die essentiellen Daten durch Kodierung (D.T.M.F.) sendet, in Überlagerung auf dem so hergestellten Sprachverbindungskanal,
und dass die Hilfszentrale (2):
• das Fahrzeug an Hand seiner Telefonnummer identifiziert, die bei seinem Anruf durch die Zentraleinheit (5) des Bordsystems (1) übermittelt wird, und daraus, ausgehend von einer Datenbasis, die auf der Ebene der Hilfszentrale gespeichert ist, andere Informationen ableitet, die die Identifikation des Fahrzeugs und des Fahrers betreffen.

7. Verfahren für einen Notruf gemäß den Ansprüchen 3 und 6, **dadurch gekennzeichnet, dass** die Bestätigung des korrekten Empfangs der Daten durch die Hilfszentrale (2) durch eine Anrufmitteilung an das Fahrzeug realisiert wird, bezüglich derer das Bordsystem (1) verifiziert, dass die Nummer des Anrufers mit der gespeicherten Nummer der Zentrale (2) übereinstimmt.

8. Verfahren für einen Notruf gemäß Anspruch 6, **dadurch gekennzeichnet, dass** in dem Fall, dass die Passagiere nicht mündlich mit der Hilfszentrale (2) kommunizieren, bei der Herstellung der Sprachverbindung, die Zentrale (2) ein Steuersignal sendet, zur Wiedergabe der durch das System (1) des Fahrzeugs vorgenommenen Aufnahme des akustischen Signals, wobei dieses Steuersignal in der Form eines S.M.S.-Signals, eines tonalen Signals, eines kodierten (D.T.M.F) Signals oder einer Anrufmitteilung ausgeführt wird, und dadurch, dass das Bordsystem (1) über den Sprachkanal der hergestellten Verbindung das im Audiospeicher (13) gespeicherte Tonsignal wiedergibt.

9. Verfahren für einen Notruf gemäß einem der Ansprüche 3, 4 oder 6, **dadurch gekennzeichnet, dass** das automatische Auslösen der Notrufprozedur durch die Zentraleinheit (5) des Bordsystems durch das Ausmachen eines Signals hervorgerufen wird, das von einem Inertialsensor ausgegeben wird, der in einer Sicherheitsvorrichtung verwendet wird, die dazu bestimmt ist, die Treibstoffzufuhr im Motor im Fall eines Aufpralls zu unterbrechen.

10. Verfahren für einen Notruf gemäß einem der Ansprüche 3, 4 oder 6, **dadurch gekennzeichnet, dass** das automatische Auslösen der Notrufprozedur durch die Zentraleinheit (5) des Bordsystems (1) durch das Ausmachen eines Signals hervorgerufen wird, das durch das Auslösen eines Sicherheitsgurt-Vorstraffers abgegeben wird, wobei dieses Auslösen den Kontakt zwischen zwei Begrenzungsflächen eines mechanischen Schalters hervorruft, die auf dem Träger des Gurts beziehungsweise an der Einhakschnalle befestigt sind.

11. Verfahren für einen Notruf gemäß einem der Ansprüche 3, 4 oder 6, **dadurch gekennzeichnet, dass** das automatische Auslösen der Notrufprozedur durch die Zentraleinheit (5) des Bordsystems (1) durch das Ausmachen eines Tonsignals hervorgerufen wird, das der Detonation entspricht, die im Falle eines Aufpralls durch das Auslösen einer Sicherheitsvorrichtung mit aufblasbarem Kissen oder eines Sicherheitsgurt-Vorstraffers abgegeben wird, wobei die Zentraleinheit (5) ununterbrochen den Pegel des elektrischen Signals, das vom Mikrofon (11) der Freisprechanlage erzeugt wird, mit einem Referenz-Schwellenwert vergleicht.

12. Verfahren für einen Notruf gemäß einem der Ansprüche 3, 4 oder 6, **dadurch gekennzeichnet, dass** das automatische Auslösen der Notrufprozedur durch die Zentraleinheit (5) des Bordsystems (1) durch das Ausmachen eines Signals hervorgerufen wird, das durch das Auslösen einer Sicherheitsvorrichtung mit aufblasbarem Kissen unter der Wirkung eines Aufpralls abgegeben wird.

13. Verfahren für einen Notruf gemäß einem der Ansprüche 3, 4 oder 6, **dadurch gekennzeichnet, dass** die Zentraleinheit (5) des Bordsystems (1) im Fahrzeug die Anzahl der Passagiere schätzt, die im Fahrzeug anwesend sind, ausgehend von der Anzahl der Öffnungen der Türen, die von den elementaren Kontaktsensoren (17_{c}) entdeckt werden, die auf der Höhe jeder Tür montiert sind, und der Dauer dieser Öffnungen.

14. Verfahren für einen Notruf gemäß einem der Ansprüche 3, 4 oder 6, **dadurch gekennzeichnet, dass** die Zentraleinheit (5) des Bordsystems (1) im Fahrzeug ununterbrochen das Tonsignal, das vom Mikrofon (11) der Freisprechanlage aufgenommen wird, in zwei verschiedenen Bereichen des Audiospeichers (13) des Systems (1) sukzessiv speichert.

15. Verfahren für einen Notruf gemäß einem der Ansprüche 4 oder 5, **dadurch gekennzeichnet, dass** für den Fall, dass das Modul zur mobilen Kommunikation (9) ein tragbares Funktelefon ist, die Zentraleinheit (5) des Bordsystems (1) im Fahrzeug seine Anwesenheit und seine Inbetriebnahme überprüft.

16. Verfahren für einen Notruf gemäß einem der Ansprüche 3, 4 oder 6, **dadurch gekennzeichnet, dass** für den Fall, dass ein Funktelefon einen Code benötigt, um den Aufbau einer Verbindung zu autorisieren, die Zentraleinheit (5) des Bordsystems (1) diesbezüglich eine Anforderung beim Fahrer des Fahrzeugs macht, durch ein Tonsignal oder visuelles Signal.

17. Verfahren für einen Notruf gemäß einem der Ansprüche 3, 4, 6 oder 7,
**dadurch gekennzeichnet, dass** die Zentraleinheit (5) des Bordsystems (1) den Code, der den Aufbau von Verbindungen autorisiert, vom Fahrer des Fahrzeugs ein erstes Mal erfasst, speichert und diesen Code automatisch bei jedem neuen Starten des Fahrzeugs eingibt.

18. Verfahren für einen Notruf gemäß der Ansprüche 3 und 4 **dadurch gekennzeichnet, dass** bei normalen Fahrbedingungen des Fahrzeugs die Zentraleinheit (5) des Bordsystems (1) die ergänzenden Informationen speichert, die von den Sensoren geliefert werden, mit denen das Fahrzeug ausgestattet ist, wie etwa das Funktionieren der Scheibenwischer und der Lichtanlage, die Temperatur der Fahrbahn, den Reifendruck und die eventuelle Anwesenheit eines anderen Fahrzeugs in seiner Nähe, die von einem Nähedetektor geliefert wird.

19. Verfahren für einen Notruf gemäß Anspruch 6, **dadurch gekennzeichnet, dass** in dem Fall, dass das Fahrzeug mit einem Modul zur mobilen Kommunikation (9) ausgestattet ist, das für ein zelluläres G.S.M. Netz ausgelegt ist und über eine S.I.M.-Karte verfügt, die Zentraleinheit (5) des Bordsystems (1) die Daten liest, die auf der S.I.M.-Karte gespeichert sind, wie die Telefonnummern der Hilfszentrale, und diese in seinem Speicher (7) speichert.

## Claims

1. A device for emergency calling by a vehicle to an assistance center, said vehicle being equipped with an on-board system (1) which comprises:
- a central electronic control unit (5);
- a location module (8);
- a mobile communication module (9);
- manual control means (14);
- electronic sensors (17ₐ, 17_{b} and 17_{c}) for functioning of the components of the vehicle;
- a vocal interface (10) between the mobile communication module and the user, comprising a microphone (11), a loud-speaker (12) and an electronic monitoring circuit, in the form of a "hands-free" kit;
- sensors (17_{c}) for opening of the doors of the vehicle;
- an impact sensor (17ₐ) controlling the cutting off of intake of fuel into the engine of the vehicle; and
- means (15) for stand-by electric supply for the elements of the on-board system,
**characterized in that** the on-board system (1) further comprises:
- an electronic memory (13) dedicated to the ongoing recording of audio signals detected in the passenger compartment of the vehicle; and an electronic central unit (18) for processing of the acoustic signal detected in the passenger compartment of the vehicle, applied to voice recognition in order to evaluate, at the time of detection of vocal signals, elementary identifiers of the voices detected, from which the central unit (5) of the on-board system estimates the number of passengers present in the vehicle.

2. A device for emergency calling in accordance with claim 1, **characterized in that** the on-board system (1) in the vehicle further comprises a connection to a vehicle speed sensor (20).

3. A process for emergency calling implemented by a device in accordance with claim 2, comprising the following stages, executed:
- under normal running conditions of the vehicle, by the central unit (5) of the on-board system (1):
- verification of functioning of the mobile communication module (9),
- ongoing saving, over a set minimal duration (d), of the last location points, of the speed, of the direction of the vehicle and of the distance covered since the last location point, in the local memory (7),
- evaluation of the signals emitted by the sensors and detection of an impact,
- estimating and memorizing of the number of passengers,
- ongoing recording, over a set minimal duration (d), of the acoustic signal picked up by the microphone (11) of the module (10), in the audio memory (13),
- in the event of manual or automatic triggering of the emergency calling procedure:
- automatic calling of the telephone number of the assistance center (2) for establishment of a vocal communication between the passengers of the vehicle and the center (2),
- periodic transmission to the assistance center (2), through the central unit (5) of the on-board system (1), of a brief message of memorized data concerning the running behavior of the vehicle,
- transmission of essential memorized data concerning the running behavior of the vehicle, consisting in particular of the last location point, and of the type of triggering of the calling procedure, by dual tone multiple frequency coding D.T.M.F. on the voice channel so established,
- confirmation of the correct receipt of the data by the assistance center (2), interrupting the periodic transmission of the data.

4. A process for emergency calling implemented by a device in accordance with claim 2, comprising the following stages, executed:
- under normal running conditions of the vehicle, by the central unit (5) of the on-board system (1);
- verification of the functioning of the mobile communication module (9),
- ongoing saving, over a set minimal duration (d), of data concerning the running behaviour consisting of the last location points, the speed and direction of the vehicle,
- ongoing evaluation of the signals emitted by the sensors and detection of an impact,
- estimating and memorising of the number of passengers,
- ongoing recording, over a set minimal duration (d), of the acoustic signal picked up by the microphone (11) of the module (10) in the audio memory (13)
- in the event of manual or automatic triggering of the emergency calling procedure:
- automatic calling of the telephone number of the assistance center for the establishment of a vocal communication between the passengers of the vehicle and the center,
- transmission, by the central unit (5) of the on-board system (1) to the assistance center (2), of a brief message of memorized data concerning the running behaviour of the vehicle,
- transmission of essential memorized data concerning the running behaviour of the vehicle, consisting in particular of the last location point, and the type of triggering of the calling procedure, manual or automatic, by D.T.M.F. coding on the voice channel so established,
- transmission by the assistance center, in the event of defective receipt of data, of a command signal for retransmission of the data by the on-board system.

5. A process for emergency calling in accordance with one of claims 3 or 4, **characterized in that** it comprises an additional stage of calculation of the distance traversed by the vehicle since the last available GPS location point.

6. A process for emergency calling in accordance with one of claims 3, 4 or 5, implemented by a device equipped with a mobile communication module (9) suitable for the G.S.M. cellular network, **characterized in that** in the event of triggering of the emergency calling procedure, the central unit (5) of the on-board system (1) in the vehicle:
- transmits previously memorised data concerning the running behaviour of the vehicle at least in the form of a message of the "Short Message Service" S.M.S. type,
- automatically dials the telephone number of the assistance center (2), memorized in the system (1), and transmits the essential data by D.T.M.F. coding, with superposition on the vocal communication channel so established,
and **in that** the assistance center (2):
- identifies the vehicle by its telephone number transmitted at the time of its call by the central unit (5) of the on-board system (1) and deduces therefrom, from a data base stored in the assistance center, other information relating to the identification of the vehicle and its driver.

7. A process for emergency calling in accordance with claims 3 and 6, **characterized in that** the confirmation of the correct receipt of the data by the assistance center (2) is effected by a call notice to the vehicle, the on-board system (1) of which verifies that the number of the caller corresponds to the number of the center (2) memorized.

8. A process for emergency calling in accordance with claim 6, **characterized in that**, in the event that the passengers do not communicate verbally with the assistance center (2), at the time of establishment of vocal communication, the center (2) transmits a command signal for restoration of the recording of the acoustic signal effected by the system (1) of the vehicle, this command signal being effected in the form of an S.M.S. signal, a tonal signal, a D.T.M.F. coded signal or a call notice, and **in that** the on-board system (1) restores, on the voice channel of said established communication, said sound signal recorded in the audio memory (13).

9. A process for emergency calling in accordance with one of claims 3, 4 or 6, **characterized in that** the automatic triggering of the emergency calling procedure by the central unit (5) of the on-board system is brought about by the detection of a signal emitted by a sensor in inertia, used in a safety device intended to cut off the intake of fuel into the engine in the event of impact.

10. A process for emergency calling in accordance with one of claims 3, 4 or 6, **characterized in that** the automatic triggering of the emergency calling procedure by the central unit (5) of the on-board system (1) is brought about by the detection of a signal emitted by the triggering of a safety-belt pretensioner, said triggering bringing about contact between two terminals of a mechanical contactor attached respectively on the support of said belt and on the fastening buckle.

11. A process for emergency calling in accordance with one of claims 3, 4 or 6, **characterized in that** the automatic triggering of the emergency calling procedure by the central unit (5) of the on-board system (1) is brought about by the detection of a sound signal corresponding to the bang emitted in the event of impact by the triggering of an inflatable cushion safety device, or a safety belt pretensioner, the central unit (5) continuously comparing the level of the electric signal generated by the microphone (11) of the "hands free" telephone kit to a threshold reference value.

12. A process for emergency calling in accordance with one of claims 3, 4 or 6, **characterized in that** the automatic triggering of the emergency calling procedure by the central unit (5) of the on-board system (1) is brought about by the detection of a signal emitted by the triggering of an inflatable cushion safety device under the effect of an impact.

13. A process for emergency calling in accordance with one of claims 3, 4 or 6, **characterized in that** the central unit (5) of the on-board system (1) in the vehicle estimates the number of passengers present in the vehicle from the number of openings of the doors detected by the elementary contact sensors (17_{c}) mounted in each door, and from the duration of these openings.

14. A process for emergency calling in accordance with one of claims 3, 4 or 6, **characterized in that** the central unit (5) of the on-board system (1) memorizes in an ongoing manner the sound signal picked up by the microphone (11) of the "hands free" telephone kit (10), on two separate zones of the audio memory (13) of the system (1) successively.

15. A process for emergency calling in accordance with one of claims 4 or 5, **characterized in that**, in the case where the mobile communication module (9) is a portable radiotelephone, the central unit (5) of the on-board system (1) in the vehicle verifies the presence and putting into service thereof.

16. A process for emergency calling in accordance with one of claims 3, 4 or 6, **characterized in that**, in the case of a radio telephone requiring a code in order to authorize the establishment of a communication, the central unit (5) of the on-board system (1) makes the request therefor from the driver of the vehicle, through a sound or visual signal.

17. A process for emergency calling in accordance with one of claims 3, 4, 6 or 7, **characterized in that** the central unit (5) of the on-board system (1) memorizes the code authorizing the establishment of communications, initially discerned through the driver of the vehicle, and automatically enters said code upon each new start-up of the vehicle.

18. A process for emergency calling in accordance with claims 3 and 4, **characterized in that**, under normal running conditions of the vehicle, the central unit (5) of the on-board system (1) memorizes additional information delivered by sensors provided in the vehicle, such as the functioning of windshield wipers and lighting systems, the temperature of the roadway, the tire pressure, and the possible presence of another vehicle in the vicinity thereof, issued by a proximity detector.

19. A process for emergency calling in accordance with claim 6, **characterized in that**, in the event that the vehicle is equipped with a mobile communication module (9) suitable for a G.S.M. cellular network and is provided with an S.I.M. card, the central unit (5) of the on-board system (1) reads the data memorized on the S.I.M. card, such as the telephone numbers of the assistance center, and stores them in its memory (7).
